# EUROPÄISCHE PATENTSCHRIFT

(11) **EP 1 023 984 B1**
(45) Veröffentlichungstag und Bekanntmachung des Hinweises auf die Patenterteilung: **20.04.2005**
(21) Anmeldenummer: 99125478.0
(22) Anmeldetag: 21.12.1999
(51) Int. Cl.: B29C 47/22

(54) **Strangpresskopf zum Extrusionsblasformen von Kunststoffbehältern**
Extrusion head for extrusion blow moulding plastic containers
Tête d'extrusion pour la fabrication de corps creux en matière plastique par extrusion-soufflage

(30) Priorität: 27.01.1999 DE 19903084
(43) Veröffentlichungstag der Anmeldung: 02.08.2000
(73) Patentinhaber: Feuerherm, Harald, D-53840 Troisdorf (DE)
(72) Erfinder: Feuerherm, Harald, Dipl.-Ing. Maschinenbau, 53840 Troisdorf (DE); Kappen-Feuerherm, Rolf, Dipl.-Ing., 53840 Troisdorf (DE)
(74) Vertreter: Albrecht, Rainer Harald, Dr.-Ing.

(56) Entgegenhaltungen:
- EP-A- 1 004 423
- DE-A- 2 823 999
- DE-A- 19 829 183
- DE-B- 1 161 412
- DE-C- 19 603 231
- US-B1- 6 284 169
- PATENT ABSTRACTS OF JAPAN vol. 013, no. 376 (M-862), 21. August 1989 (1989-08-21) & JP 01 128821 A (FUJIKURA LTD), 22. Mai 1989 (1989-05-22)

## Beschreibung

Die Erfindung betrifft einen Strangpresskopf zum Extrusionsblasformen von Kunststoffbehältern mit
einer Ringspaltdüse, die einen Dorn und einen ringförmigen Düsenkörper aufweist,
einer elastisch deformierbaren Hülse und
Stelleinrichtungen zur radialen Deformierung der elastischen Hülse,
wobei die Hülse einen Düsenspalt begrenzt, dessen Spaltbreite durch axiale Stellbewegungen des Dorns und/oder des Düsenkörpers veränderbar ist und dessen Geometrie durch Deformierung der Hülse während der Extrusion eines schlauchförmigen Vorformlings beeinflussbar ist.

Bei einer aus DE-C 28 23 999 bekannten Ausführung (Fig. 6) ist die Unterkante der Hülse am Düsenkörper abgestützt. In der Praxis hat sich die Ausführung zur Fertigung von Vorformlingen, die einen großen Durchmesser besitzen, bewährt. Bei der Fertigung von schlauchförmigen Vorformlingen mit kleinem Durchmesser können sich jedoch Probleme ergeben. Bei einer Ringspaltdüse mit kleinem Durchmesser muss eine sehr dünnwandige Hülse eingesetzt werden, damit die für die Profilgebung des Ringspaltes erforderlichen Deformationen der Hülse möglich sind. Entsprechend schmal ist die Auflagefläche an der Unterkante der Hülse. Vor allem bei ausgefahrenem Dorn in Kombination mit einer Deformation der Hülse besteht die Gefahr, dass die Schmelze bei Austritt aus dem Düsenspalt an Umfangsabschnitten des zum Düsenkörper gehörenden Halterings anläuft. Dies führt zu Markierungen und Wanddickenunterschieden im Schlauch und hat eine Qualitätsminderung des aus dem Schlauch blasgeformten Kunststoffbehälters zur Folge. Oft ist das Anlaufen des Schlauches auch mit einem Produktionsstörungen verursachenden Anhaften verbunden.

Bei einer in Fig. 7 der DE-C 28 23 999 dargestellten Ausführung hat die Hülse an ihrem einlaufseitigen Ende einen formstabilen Kragen mit einer ringförmig umlaufenden Flanschfläche, die auf ihrer gesamten Fläche im Düsenkörper abgestützt ist. Die von dem Schmelzestrom auf die Hülse ausgeübten Axialkräfte werden über den Kragen in den Düsenkörper eingeleitet.

Der Erfindung liegt die Aufgabe zugrunde, einen Strangpresskopf mit den eingangs beschriebenen Merkmalen so weiter auszubilden, dass große und weitgehend verschleißfreie Deformationen und Verschiebungen an dem schlauchaustrittseitigen Ende der Hülse möglich sind, wobei im Fall einer Fertigung kleiner Schlauchdurchmesser ein Anlaufen der aus dem Düsenaustrittsspalt austretenden Schmelze am Düsenkörper ausgeschlossen sein soll.

Die Aufgabe wird erfindungsgemäß dadurch gelöst, dass die Hülse im Düsenkörper und/oder am Dorn nur an segmentförmigen Flächen axial abgestützt ist. Bevorzugte Ausgestaltungen des erfindungsgemäßen Strangpresskopfes sind Gegenstand der nachgeordneten Ansprüche 2 bis 24 und werden anhand der Figurenbeschreibung erläutert.

Im Folgenden wird die Erfindung anhand einer lediglich ein Ausführungsbeispiel darstellenden Zeichnung ausführlich erläutert. Es zeigen schematisch
- **Fig. 1**: einen Längsschnitt durch eine Ringspaltdüse eines Strangpresskopfes,
- **Fig. 2**: den Schnitt A-A aus Fig. 1,
- **Fig. 3**: einen Schnitt durch eine zweite Ausführung des erfindungsgemäßen Strangpresskopfes in der in Fig. 4 dargestellten Schnittebene B-B,
- **Fig. 4**: den Schnitt C-C aus Fig. 3,
- **Fig. 5 bis 11**: weitere Ausführungsbeispiele des erfindungsgemäßen Strangpresskopfes, teils im Längsschnitt und teils im Querschnitt.

Die in den Figuren dargestellten Vorrichtungen werden zum Extrusionsblasformen von Kunststoffbehältern, die unterschiedliche Behälterquerschnitte aufweisen können, eingesetzt. Dabei wird ein schlauchförmiger Vorformling aus einer thermoplastischen Kunststoffschmelze aus einem Strangpresskopf extrudiert und in einer nicht dargestellten Blasform zu einem Kunststoffbehälter aufgeweitet. Der Strangpresskopf weist eine Ringspaltdüse 1 mit einem Dorn 2, einem ringförmigen Düsenkörper 3 sowie einer elastisch deformierbaren Hülse 4 auf. Die Hülse 4 kann im Düsenkörper und/oder am Dorn 2 angeordnet sein. An den Mantel der elastischen Hülse 4 greifen Stelleinrichtungen 5 an, durch deren Stellbewegungen die Hülse 4 radial verformbar ist. Der Dorn 2 und die Hülse 4 begrenzen einen Düsenspalt, dessen Spaltbreite durch axiale Stellbewegungen des Dorns 2 und/oder des Düsenkörpers 3 veränderbar ist und dessen Geometrie durch Deformierung der Hülse 4 während der Extrusion eines schlauchförmigen Vorformlings beeinflussbar ist. Die axialen Stellbewegungen des Dorns 2 und/oder des Düsenkörpers 3 sowie die auf die Hülse 4 ausgeübten radialen Stellbewegungen sind programmgesteuert.

Es ist bekannt, eine Mehrzahl von Strangpressköpfen nebeneinander als Mehrfach-Blaskopf anzuordnen (Plastverarbeiter 44 (1993), Nr. 2, Seite 28). Bei einer solchen Ausführung können die den Strangpressköpfen zugeordneten Stelleinrichtungen mechanisch miteinander gekoppelt sein, um die Zahl der erforderlichen, teuren Antriebe zu reduzieren.

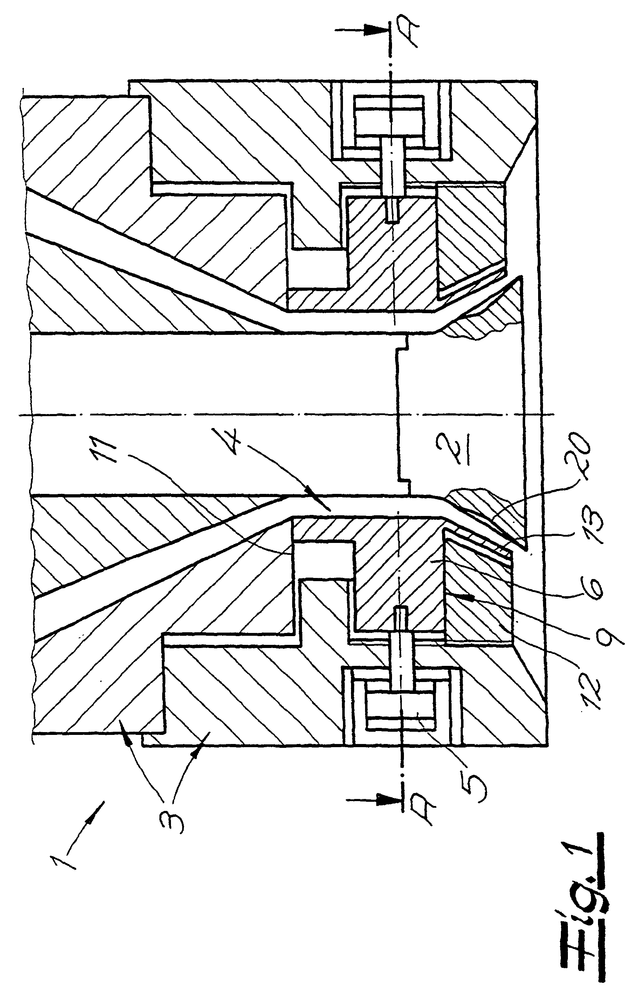

Die Hülse 4 ist im Düsenkörper 3 und/oder am Dorn 2 nur an segmentförmigen Flächen abgestützt. Bei den in den Fig. 1 bis 9 dargestellten Ausführungen der Erfindung weist die Hülse 4 mantelseitig angeschlossene und in Umfangsrichtung mit Abstand zueinander angeordnete Nocken 6 auf, die im Düsenkörper axial abgestützt sind. Zur Abstützung der Hülse 4 sind zumindest zwei Nocken 6 erforderlich. Die Axialkräfte, die von der Schmelze auf die Hülse ausgeübt werden und/oder mit einer elastischen Verformung der Hülse entstehen, sind über die Nocken in den Düsenkörper einleitbar, wobei die Nocken je nach Ausführung unterseitig oder sowohl unterseitig als auch oberseitig im Düsenkörper abgestützt sein können.

Der Abstand der Nocken von dem unterseitigen Ende der Hülse ist beliebig festlegbar. Im Rahmen der Erfindung liegt es, die Nocken 6 am einlaufseitigen Ende der Hülse 4 anzuordnen. Vorzugsweise sind die Nocken 6 am Mantel zwischen dem einlaufseitigen und auslaufseitigen Ende der Hülse vorgesehen. Stets ist die Nockenauflage des Düsenkörpers 3 dabei so am Umfang der Hülse 4 angeordnet, dass der aus dem Ringspalt austretende Schmelzestrom nicht am Düsenkörper 3 anlaufen kann.

Die angeformten Nocken 6 versteifen die Hülse 4 lediglich an den Umfangsabschnitten der Hülse 4. Die Hülsenabschnitte zwischen den Nocken 6 sind unter Wirkung der auf die Hülse 4 wirkenden Stelleinrichtungen deformierbar. Die Auflagefläche der Nocken zur Abstützung im Düsenkörper 3 kann unabhängig von der Anbindung der Nocken 6 frei gestaltet werden. Die Auflageflächen 9 können so dimensioniert werden, dass zulässige Flächenpressungen, die eine verschleißarme Gleitbewegung zwischen den Nocken 6 und den zugeordneten Gegenflächen des Düsenkörpers oder Dorns erlauben, nicht überschritten werden. Gemäß einer bevorzugten Ausführung weisen die Nocken 6 daher in Umfangsrichtung eine breite Auflagefläche zur Abstützung am Düsenkörper bzw. Dorn und einen an die Mantelfläche der Hülse angeformten Hals 10 geringerer Breite auf. Die Breite des Halses 10 und die Breite der Auflagefläche 9 sind unabhängig voneinander so festlegbar, dass einerseits eine gute Abstützung der Hülse 4 gewährleistet ist und andererseits die Deformierbarkeit der Hülse 4durch die Anschlusselemente so wenig wie möglich beeinträchtigt ist.

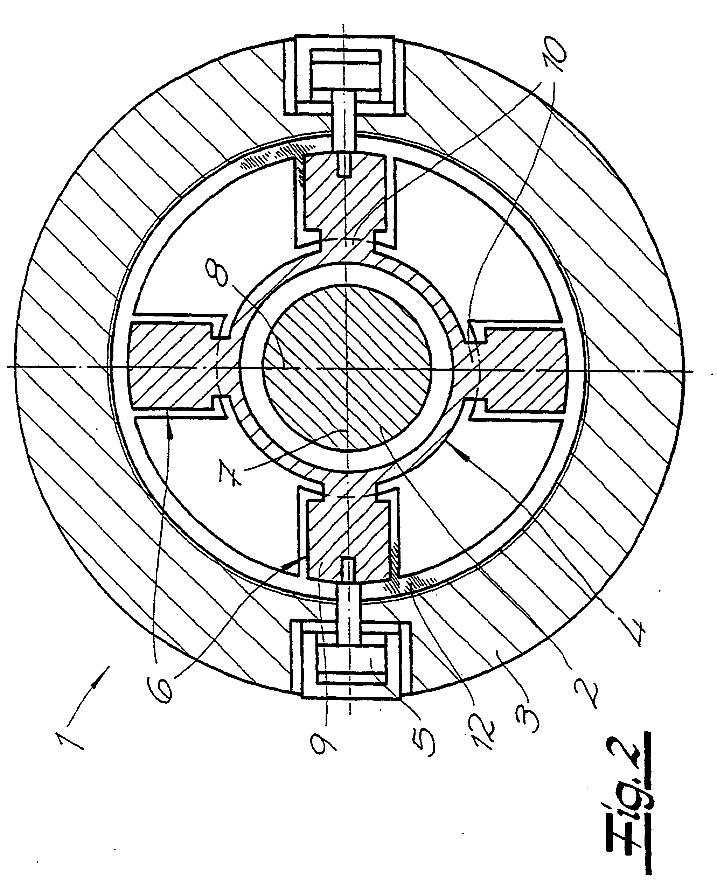

Im Ausführungsbeispiel nach Fig. 1 und 2 erfolgt die Abstützung der Hülse 4 an vier in äquidistanten Abständen am Umfang angeordneten Nocken 6, die in der Kraftwirkungsachse der Stelleinrichtungen 5 und quer zur Kraftwirkung der Stelleinrichtungen 5 angeordnet sind. In Umfangsrichtung weisen die Nocken 6 eine breite Auflagefläche 9 zur Abstützung am Düsenkörper 3 sowie einen an die Mantelfläche der Hülse 4 angeformten Hals 10 geringerer Breite auf (Fig. 2). Eine zumeist unerwünschte versteifende Wirkung der Nocken 6 auf die Hülse 4 bleibt auf Umfangsabschnitte begrenzt, die im Vergleich zum Gesamtumfang der Hülse 4 klein sind. Die Umfangsabschnitte zwischen den Nocken 6 bleiben elastisch deformierbar.

Bei der in den Fig. 1 und 2 dargestellten Ausführung ist die Hülse 4 an ihrem einlaufseitigen Rand gegenüber einer Stirnfläche 11 des Düsenkörpers radial beweglich und in den Teilbereichen des Umfanges in ihrer gesamten Länge gleichmäßig radial verstellbar. Die Nocken 6 zur Abstützung der Hülse 4 und Lastaufnahme liegen auf einem an der Düsenunterseite in den Düsenkörper 3 einsetzbaren Haltering 12 radial beweglich auf. Die Nocken 6 sind auf der Höhe der Stelleinrichtungen 5 angeordnet, wobei die auf der Achse 7 die in der Kraftrichtung der Stelleinrichtungen 5 angeordneten Nocken 6 mit den Stelleinrichtungen 5 verbunden sind. Die Hülse 4 weist einen deformierbaren Kragen 13 auf, der in den Innendurchmesser des Halterings 12 mit radialem Spiel eingreift und die Außenwand des Ringspaltes formt.

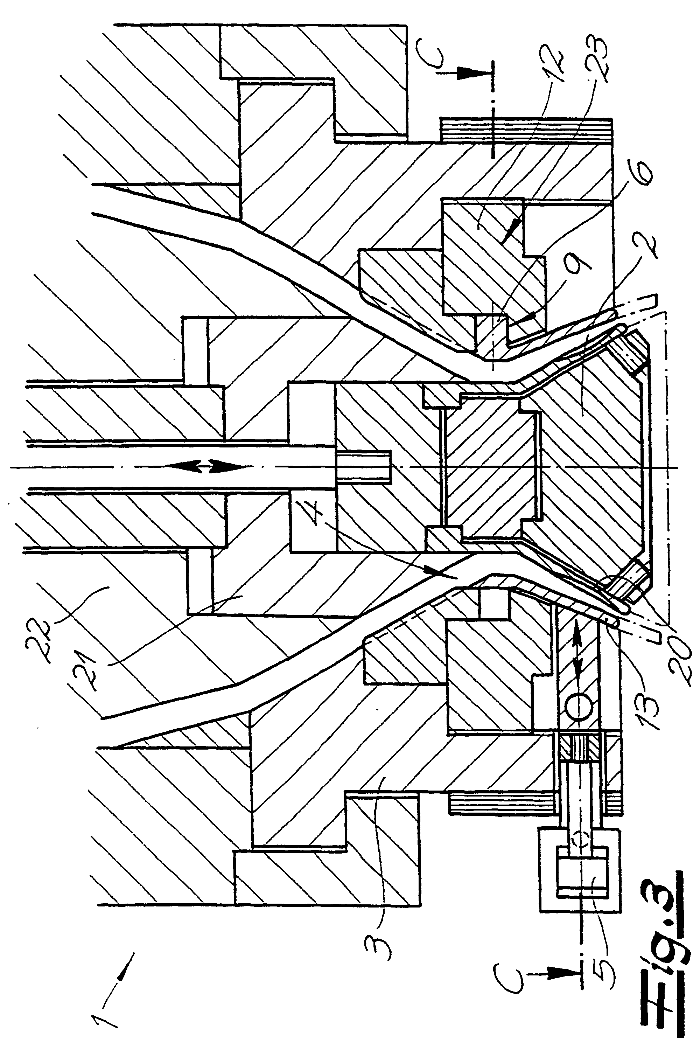

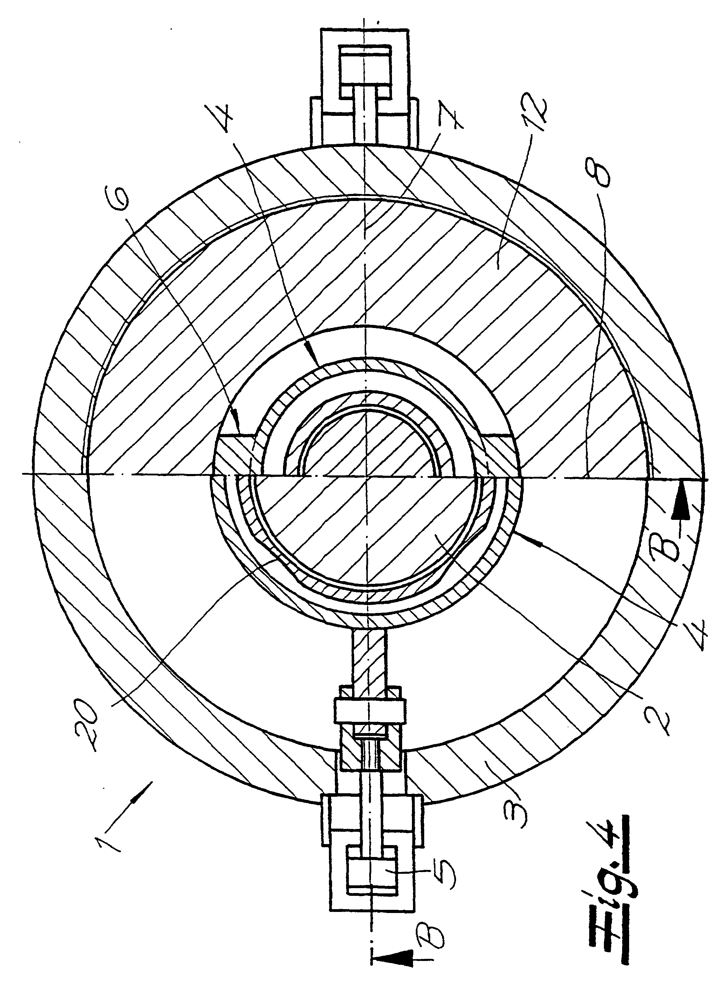

Der Fig. 2 entnimmt man, dass der Haltering 12 keine durchgehende Ringfläche aufweist sondern mit den Nocken 6 der Hülse 4 nach Art eines Bajonettverschlusses zusammenwirkt. Die Hülse 4 ist in den Düsenkörper bis zu einem Anschlag axial einsetzbar und durch eine Drehbewegung im Düsenkörper 3 verriegelbar. Die Anordnung erlaubt eine Montage und Demontage der Hülse 4 von der Unterseite der Ringspaltdüse 1. Auch bei den in den Fig. 3 und 4 dargestellten Ausführungen sind die Teile in ähnlicher Weise auswechselbar. Im Rahmen der Erfindung besteht auch die Möglichkeit, den Haltering 12 mit der Hülse 4 als vormontierte Baugruppe ein- und auszubauen, wobei der Haltering 12 beispielsweise durch einen bajonettartigen Schnellverschluss im Düsenkörper 3 verriegelbar sein kann.

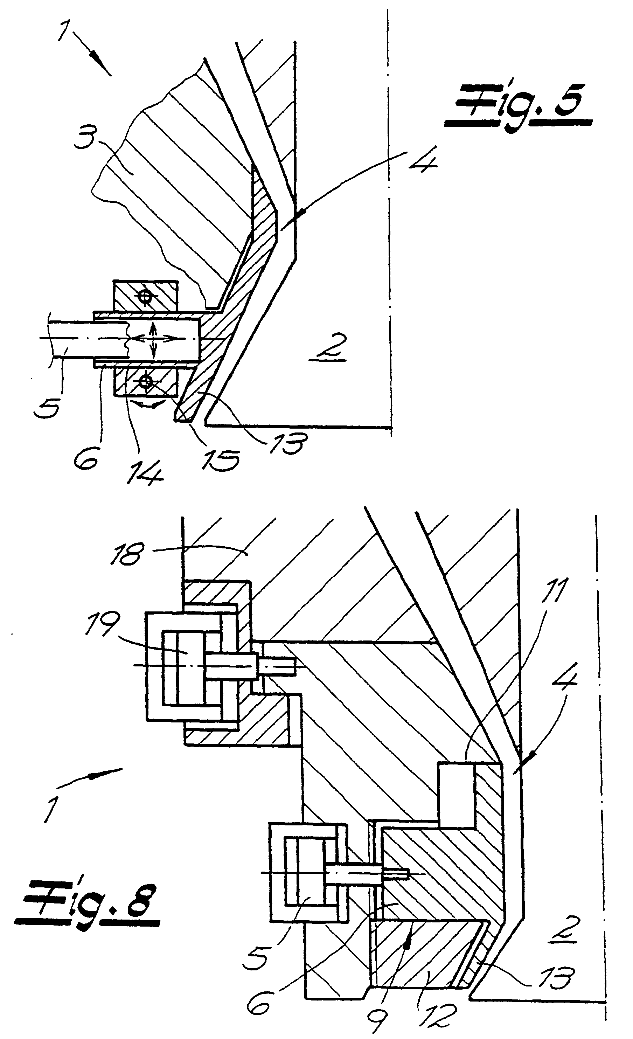

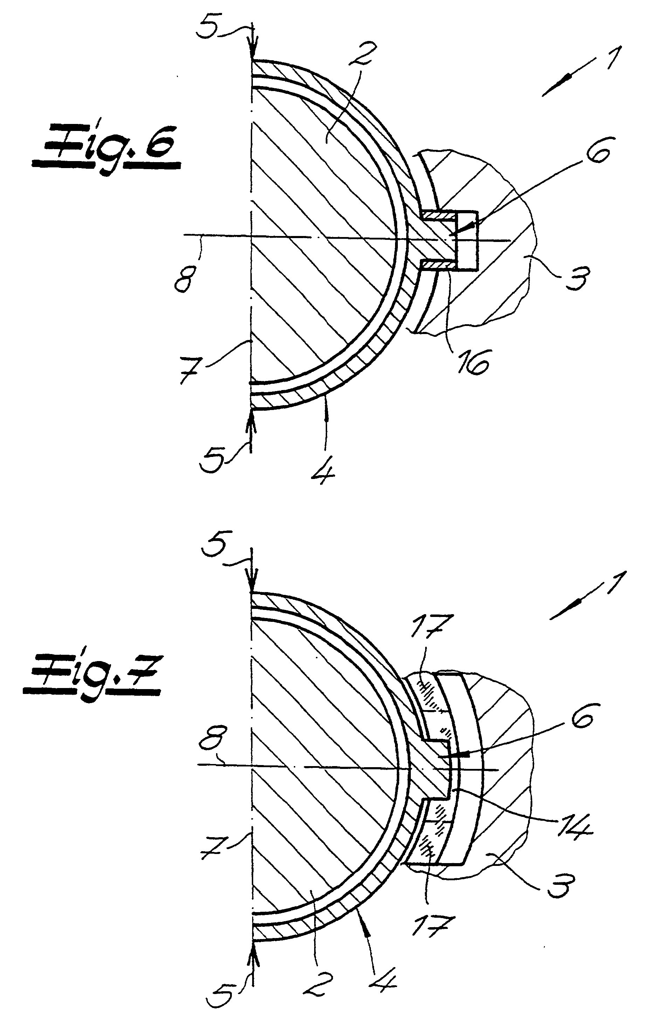

Bei den in den Fig. 3 bis 7 dargestellten Ausführungsbeispielen ist die Hülse 4 an ihrem einlaufseitigen Ende mit einem axialen Schiebesitz innerhalb des Düsenkörpers gehalten, so dass der einlaufseitige Rand der Hülse 4 bei radialer Deformation der Hülse 4 in axialer Richtung beweglich ist. In dem in den Fig. 3 und 4 dargestellten Ausführungsbeispiel sind zur Abstützung der Hülse zwei Nocken 6 quer zur Kraftwirkung der Stelleinrichtungen kurz vor dem oberen, einlaufseitigen Ende der Hülse 4 angeordnet. Im Ausführungsbeispiel der Fig. 5 erfolgt die Abstützung mit Abstand vom einlaufseitigen Ende, z. B. auf Höhe der radialen Stelleinrichtungen 5. Da das einlaufseitige Ende der Hülse radial nicht verschiebbar ist, ist die Deformation der Hülse 4, insbesondere bei gleichgerichteten Stellbewegungen der Stelleinrichtungen 5, mit einer Schwenkbewegung verbunden. Um eine gleichmäßige Auflage der Nocken 6 zu gewährleisten, sind die Nocken 6 auf mindestens einer Fläche 14 abgestützt, die eine Kippbewegung zulässt und sich im Ausführungsbeispiel an die Kippbewegung der Nocken 6 anpasst. Im Ausführungsbeispiel der Fig. 5 ist die Auflagefläche 14 um eine Drehachse 15 quer zur Kraftwirkungslinie der Stelleinrichtungen 5 kippbeweglich angeordnet. Bei der Ausführungsform der Fig. 6 sind die Nocken 6 als Zapfen ausgebildet, die quer zur Kraftwirkung der Stelleinrichtungen 5 ausgerichtet schiebebeweglich in einer Zapfenaufnahme des Düsenkörpers 3 gelagert sind und eine Verschleißhülse 16 tragen können. Es versteht sich, dass die Nocken 6 auch Zapfenaufnahmen enthalten können, in die Zapfen einfassen. Die Zapfenaufnahme kann auch auf einem Schlitten angeordnet sein, der quer zur Drehachse des Zapfens beweglich ist. Im Ausführungsbeispiel der Fig. 7 erfolgt die Abstützung der Nocken 6 an einer Fläche 14, die nach den Regeln der Statik als Balken auf zwei Stützen 17 ausgebildet ist und sich an Kippbewegungen der Nocken 6 anpassen kann. Alternativ können auch Tellerfedern zur beweglichen Abstützung der Nocken 6 vorgesehen sein. Die axialen Abstützungen der Hülse 4 im Düsenkörper 3 können auf beliebiger Höhe der Hülse 4 erfolgen.

Der Düsenkörper 3 kann an einem Gehäuse 18 des Strangpresskopfes fest montiert oder, wie in Fig. 8 angedeutet, radial beweglich am Gehäuse 18 des Strangpresskopfes angeordnet sein. Eine radiale Beweglichkeit des Düsenkörpers 3 kann zur Zentrierung der Düse genutzt werden. An den radial beweglichen Düsenkörper 3 können aber auch ein oder mehrere Zusatzkraftantriebe 19 angeschlossen sein, die während des Schlauchaustrittes zur weiteren Beeinflussung des Düsenspaltes programmgesteuerte Bewegungen ausführen.

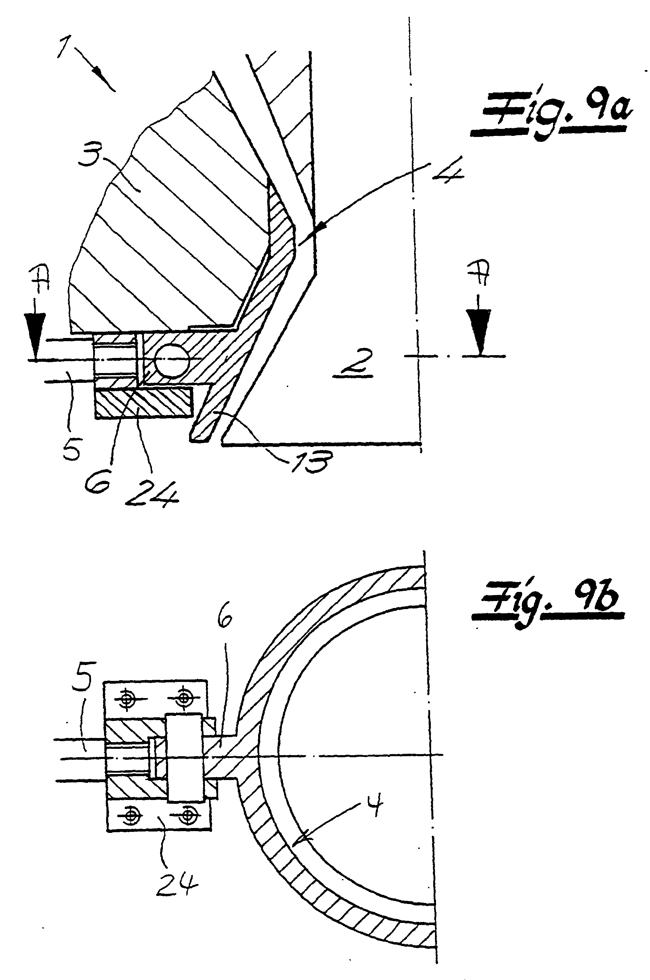

Die Fig. 9a und 9b zeigen im Längsschnitt sowie im Querschnitt (Schnittebene A-A aus Fig. 9a) eine weitere Ausgestaltung des erfindungsgemäßen Strangpresskopfes. Die elastisch deformierbare Hülse 4ist mit einem axialen Schiebesitz im Düsenkörper 3 angeordnet und weist umfangsseitig zwei oder mehr Nocken 6 auf. Der im Ringspalt herrschende Schmelzedruck übt auf die sich zum Düsenaustritt konisch erweiternde Hülse 4 eine nach oben gerichtete Kraft aus, die von oberseitig an einer Gleitfläche des Düsenkörpers 3 abgestützten Nocken 6 aufgenommen wird. Die Stelleinrichtungen 5 sind mit einem Schiebesitz an einer unterseitigen Platte 24 geführt, die an dem Düsenkörper 3 angeschraubt ist. Zwischen der Platte 24 und den Nocken 6 verbleibt ein Spalt, der Kippbewegungen der Nocken 6 zulässt, wenn die Hülse 4 radial deformiert wird.

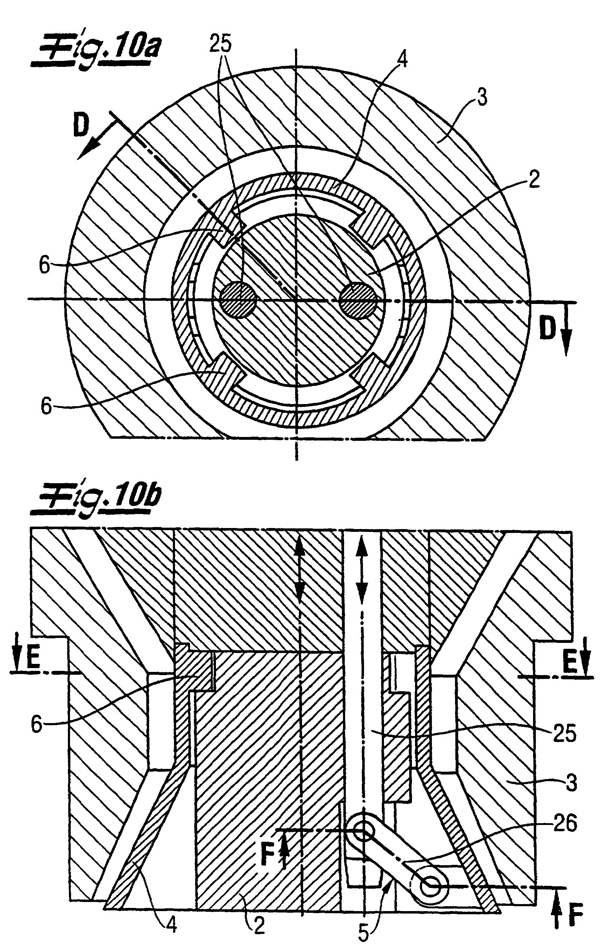

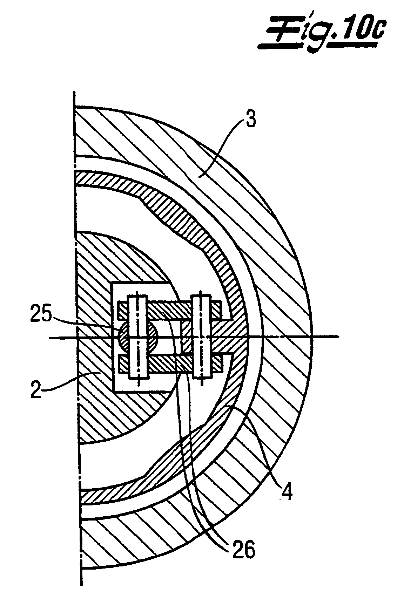

Bei der in den Fig. 10a bis 10c dargestellten Ausführung des erfindungsgemäßen Strangpresskopfes ist die elastisch deformierbare Hülse 4 am Dorn 2 angeordnet. In Fig. 10a ist ein Querschnitt in der Schnittebene E-E aus Fig. 10b dargestellt. Die Fig. 10b zeigt einen Längsschnitt in der Schnittebene D-D aus Fig. 10a. Die Fig. 10c zeigt ausschnittsweise den Schnitt F-F aus Fig. 10b. Einer vergleichenden Betrachtung der Fig. 10a bis 10c entnimmt man, dass die Hülse 4 an ihrem einlaufseitigen, oberen Ende innenseitige Nocken 6 aufweist, die am Dorn 2 axial abgestützt sind. Die Abstützung kann an zwei oder mehr Nocken 6 erfolgen. Im Ausführungsbeispiel sind vier Nocken 6 vorgesehen, die in äquidistanten Abständen unter einem Winkel 45° versetzt zur Wirkungslinie der Stelleinrichtungen 5 angeordnet sind. Die Stelleinrichtung 5 zur radialen Deformierung der Hülse weist mindestens eine Stellstange 25 auf, die über einen Hebel 26 an die Hülseninnenseite angeschlossen ist. Im Ausführungsbeispiel sind zwei separat betätigbare Stellstangen 25 mit zugeordneten Hebeln 26 vorgesehen. Ferner entnimmt man der Fig. 10c, dass die Hülse 4 ein Wandstärkenprofil mit Dick- und Dünnstellen aufweist. Die vorgesehenen Verdickungen beeinflussen die radiale Deformation der Hülse 4 und das sich bei einer Betätigung der Stelleinrichtungen 5 einstellende Profil der Hülse 4.

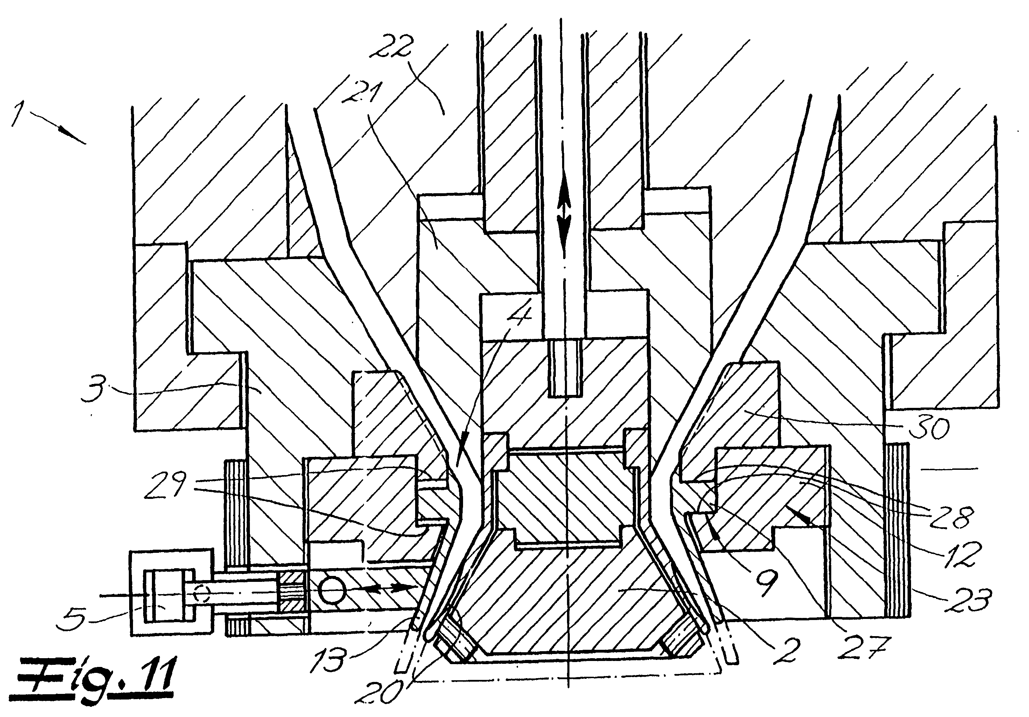

Bei der in Fig. 11 dargestellten Ausführung des erfindungsgemäßen Strangpresskopfes ist in den Düsenkörper 3 eine elastisch deformierbare Hülse 4 eingesetzt, die an ihrem einlaufseitigen Ende einen ringförmigen Bund 27 aufweist, der nicht auf seiner gesamten Ringfläche sondern lediglich an segmentförmigen Flächen axial abgestützt ist. Auf diese Weise können die zuvor beschriebenen Wirkungen ebenfalls erreicht werden. Der Düsenkörper 3 weist eine Ringfläche zur Abstützung der Hülse 4 auf, die für die segmentförmige Abstützung der Hülse in Umfangsrichtung mit Erhebungen 28 und/oder Vertiefungen 29 versehen ist. Die im rechtsseitigen Schnitt der Fig. 11 erkennbaren Erhebungen 28 stützen den Bund 27 der Hülse 4 nach oben und unten. Die im linksseitigen Schnitt der Fig. 11 dargestellten Vertiefungen 29 lassen axiale Bewegungen des Bundes 27 der Hülse 4 nach oben und unten zu. Alternativ könnte auch die Auflagefläche des ringförmigen Bundes 27 ein Profil mit Vorsprüngen und/oder Rücksprüngen für die segmentförmige Abstützung der Hülse 4 aufweisen. Es versteht sich, dass die beschriebene Abstützung auch bei einer Hülse 4 eingesetzt werden könnte, die am Dorn 2 angeordnet ist. Ferner kann die radiale Wandstärke des ringförmigen Bundes 27 in Umfangsrichtung ungleichförmig ausgebildet sein.

Durch Deformation der elastischen Hülse 4 ist die Geometrie des Ringspaltes während der Extrusion eines Vorformlings veränderbar. Das schließt nicht aus, dass auf den Schmelzekanal zusätzliche Einrichtungen einwirken, welche das Wandprofil des Vorformlings ebenfalls beeinflussen. So kann z. B. der Dorn 2 in Strömungslängsrichtung verlaufende Nuten 20 aufweisen, deren Tiefe zum Düsenaustritt hin zunimmt oder abnimmt (Fig. 1), konstant ist oder ein beliebiges Profil in Längsrichtung aufweisen kann. Ferner besteht die Möglichkeit, den Düsenkörper 3 und/oder den Dorn 2 mit einer in den Fließbereich des Ringspaltes eingreifenden, verstellbaren Profilierungseinrichtung 21 auszurüsten. Gemäß der in Fig. 3 dargestellten Ausführung besteht die Profilierungseinrichtung 21 z. B. aus einer Schieberhülse, die an einer Pinole 22 unabhängig vom Dorn 2 axial beweglich geführt ist. Die Stirnfläche der Profilierungseinrichtung 21 und/oder ein gegenüberliegender konischer Abschnitt des Düsenkörpers ist in Umfangsrichtung profiliert. Anstelle einer achsparallel zum Dorn angeordneten Schieberhülse können als Profilierungseinrichtung 21 auch radial bewegliche Schieber im Düsenkörper angeordnet sein. Alle zuvor beschriebenen Profilierungseinrichtung 21 können in einem Kanalbereich oberhalb der Hülse 4 oder auch an anderer Stelle des Ringspaltes angeordnet sein.

Wenn Kunststoffbehälter mit unterschiedlichen Querschnittsformen und/oder unterschiedlichem Behälterdurchmesser gefertigt werden müssen, können die erforderlichen Umstellungen an dem erfindungsgemäßen Strangpresskopf schnell und mit geringem technischen Aufwand durchgeführt werden. Zweckmäßig ist der Düsenkörper 3 mehrteilig ausgebildet und weist ein Düsenoberteil sowie einen ringförmigen, auswechselbaren Einsatz 23 auf (Fig. 3). Die auf die Hülse 4 wirkenden Stelleinrichtungen 5 sind an das Düsenoberteil angeschlossen, wobei der auf die Hülse 4 wirkende Anschluss durch eine Schnellkupplung lösbar ist. Nach Lösen der Kupplung können der Einsatz 23 mit der Hülse sowie der Dorn 2 ohne Ausbau des Düsenoberteils und der Stelleinrichtungen 5 ausgewechselt werden. Ebenso ist es möglich, die aus der Hülse 4, dem Haltering 12 und einem mit dem Haltering 12 verschraubten Ring 30 als komplette Baugruppe auszutauschen.

Zusammenfassend ist festzustellen, dass die gewünschte Verformung der Hülse 4 durch Anordnung und die Abmessungen der segmentförmigen Stützflächen z. B. durch Nocken 6 und/oder die Dicke der Hülse 4 über den Umfang oder nur eines Höhenabschnittes in Verbindung mit der Anzahl, den Abmessungen und der Anordnung der Kraftangriffspunkte erreicht wird.

## Patentansprüche

1. Strangpresskopf zum Extrusionsblasformen von Kunststoffbehältern mit
einer Ringspaltdüse (1), die einen Dorn (2) und einen ringförmigen Düsenkörper (3) aufweist,
einer elastisch deformierbaren Hülse (4)) und
Stelleinrichtungen (5) zur radialen Deformierung der elastischen Hülse (4),
wobei die Hülse (4) einen Düsenspalt begrenzt, dessen Spaltbreite durch axiale Stellbewegungen des Dorns (2) und/oder des Düsenkörpers (3) veränderbar ist und dessen Geometrie durch Deformierung der Hülse (4) während der Extrusion eines schlauchförmigen Vorformlings beeinflussbar ist, **dadurch gekennzeichnet, dass** die Hülse (4) im Düsenkörper (3) und/oder am Dorn (2) nur an segmentförmigen Flächen axial abgestützt ist.

2. Strangpresskopf nach Anspruch 1, **dadurch gekennzeichnet, dass** die Hülse (4) mantelseitig angeschlossene und in Umfangsrichtung mit Abstand zueinander angeordnete Nocken (6) aufweist, die im Düsenkörper (3) oder am Dorn (2) axial abgestützt sind.

3. Strangpresskopf nach Anspruch 2, **dadurch gekennzeichnet, dass** die Nocken (6) zumindest nach unten abgestützt sind.

4. Strangpresskopf nach Anspruch 2 oder 3, **dadurch gekennzeichnet, dass** die Nocken (6) in Umfangsrichtung eine breite Auflagefläche (9) zur Abstützung und einen an die Mantelfläche der Hülse (4) angeformten Hals (10) geringerer Breite aufweisen.

5. Strangpresskopf nach einem der Ansprüche 2 bis 4, **dadurch gekennzeichnet, dass** die Nocken (6) identisch ausgebildet und in äquidistanten Abständen auf gleicher Höhe angeordnet sind.

6. Strangpresskopf nach einem der Ansprüche 1 bis 5, **dadurch gekennzeichnet, dass** die segmentförmigen Flächen zur Abstützung in der Kraftwirkungsachse (7) und/oder in einer Achse (8) quer zur Kraftwirkung der Stelleinrichtungen (5) angeordnet sind.

7. Strangpresskopf nach Anspruch 2, **dadurch gekennzeichnet, dass** die am Umfang angeordneten Nocken (6) zur Erzielung einer unsymmetrischen Deformation der Hülse (4) in Umfangsrichtung unterschiedlich breit ausgebildet sind und/oder in nicht äquidistanten Abständen am Umfang angeordnet sind.

8. Strangpresskopf nach einem der Ansprüche 2 bis 7, **dadurch gekennzeichnet, dass** die Hülse (4) in den Düsenkörper (3) bis zu einem Anschlag axial einsetzbar und durch eine Drehbewegung im Düsenkörper (3) verriegelbar ist, wobei die Nocken (6) nach Art eines Bajonettverschlusses oder einer Klauenkupplung zugeordnete Auflageflächen des Düsenkörpers (3) hinterfassen.

9. Strangpresskopf nach einem der Ansprüche 2 bis 8, **dadurch gekennzeichnet, dass** die Nocken (6) auf einem in den Düsenkörper (3) einsetzbaren Haltering (12) aufliegen und dass die Hülse (4) einen deformierbaren Kragen (13) aufweist, der in den Innendurchmesser des Halterings (12) mit radialem Spiel eingreift.

10. Strangpresskopf nach einem der Ansprüche 2 bis 9, **dadurch gekennzeichnet, dass** die Hülse (4) an ihrem einlaufseitigen Ende mit einem axialen Schiebesitz innerhalb des Düsenkörpers (3) gehalten ist, so dass der einlaufseitige Rand der Hülse (4) bei radialer Deformation der Hülse in axialer Richtung beweglich ist und dass die in einer Ebene unterhalb des einlaufseitigen Randes angeordneten Nocken (6) an einer Auflagefläche (14) des Düsenkörpers (3) abgestützt sind, die eine Kippbewegung der Nocken (6) zulässt.

11. Strangpresskopf nach Anspruch 10, **dadurch gekennzeichnet, dass** die Auflagefläche (14) sich an die Kippbewegung der Nocken (6) anpasst.

12. Strangpresskopf nach Anspruch 11, **dadurch gekennzeichnet, dass** die Auflagefläche (14) um eine Drehachse (15) quer zur Kraftwirkungslinie der Stelleinrichtungen (5) kippbeweglich angeordnet ist.

13. Strangpresskopf nach Anspruch 11, **dadurch gekennzeichnet, dass** die Auflagefläche (14) als Balken auf zwei Stützen (17) ausgebildet ist.

14. Strangpresskopf nach einem der Ansprüche 2 bis 9, **dadurch gekennzeichnet, dass** die Hülse (4) an ihrem einlaufseitigen Ende mit einem axialen Schiebesitz innerhalb des Düsenkörpers (3) gehalten ist, so dass der einlaufseitige Rand der Hülse (4) bei radialer Deformation der Hülse in axialer Richtung beweglich ist, und dass die in einer Ebene unterhalb des einlaufseitigen Randes angeordneten Nocken (6) als Zapfen oder Zapfenaufnahmen ausgebildet sind, die quer zur Kraftwirkung der Stelleinrichtungen (5) ausgerichtet schiebebeweglich in einem Gegenstück (3) gelagert sind.

15. Strangpresskopf nach einem der Ansprüche 2 bis 14, **dadurch gekennzeichnet, dass** die Stelleinrichtungen (5) an die Nocken (6) angeschlossen sind.

16. Strangpresskopf nach einem der Ansprüche 2 bis 15, **dadurch gekennzeichnet, dass** der Düsenkörper (3) ein Düsenoberteil und einen ringförmigen Einsatz (23) aufweist, wobei die auf die Hülse (4) wirkenden Stelleinrichtungen (5) an das Düsenoberteil angeschlossen sind, wobei die Nocken (6) am Einsatz (23) abgestützt sind und wobei der Einsatz (23) mit der Hülse (4) und der Dorn (2) ohne Ausbau des Düsenoberteils und der Stelleinrichtungen (5) auswechselbar sind.

17. Strangpresskopf nach Anspruch 1, **dadurch gekennzeichnet, dass** die Hülse (4) an ihrem einlaufseitigen Ende einen ringförmigen Bund (27) aufweist, der an segmentförmigen Flächen axial abgestützt ist.

18. Strangpresskopf nach Anspruch 17, **dadurch gekennzeichnet, dass** der Düsenkörper (3) oder der Dorn (2) eine Ringfläche zur Abstützung der Hülse (4) aufweisen, die für die segmentförmige Abstützung der Hülse in Umfangsrichtung mit Erhebungen (28) und/oder Vertiefungen (29) versehen ist.

19. Strangpresskopf nach Anspruch 17, **dadurch gekennzeichnet, dass** die Auflagefläche des ringförmigen Bundes (27) ein Profil mit Vorsprüngen und/oder Rücksprüngen für die segmentförmige Abstützung der Hülse (4) aufweist.

20. Strangspresskopf nach einem der Ansprüche 17 bis 19, **dadurch gekennzeichnet, dass** die radiale Wandstärke des ringförmigen Bundes (27) in Umfangsrichtung ungleichförmig ausgebildet ist.

21. Strangpresskopf nach einem der Ansprüche 1 bis 20, **dadurch gekennzeichnet, dass** der Düsenkörper (3) radial beweglich am Gehäuse (18) des Strangpresskopfes angeordnet ist.

22. Strangpresskopf nach einem der Ansprüche 1 bis 21, **dadurch gekennzeichnet, dass** der Düsenkörper (3) und/oder der Dorn (2) mit einer in den Fließbereich des Ringspaltes eingreifenden, verstellbaren Profilierungseinrichtung (21) ausgerüstet ist.

23. Strangpresskopf nach Anspruch 22, **dadurch gekennzeichnet, dass** die auf den Schmelzekanal einwirkende Profilierungseinrichtung (21) eine Schieberhülse aufweist, die an einer Pinole (22) unabhängig vom Dorn (2) axial beweglich geführt ist und eine Stirnfläche aufweist, wobei die Stirnfläche und/oder ein gegenüberliegender konischer Abschnitt des Düsenkörpers (3) in Umfangsrichtung profiliert ist.

24. Strangpresskopf nach Anspruch 22, **dadurch gekennzeichnet, dass** die auf den Schmelzekanal einwirkende Profilierungseinrichtung (21) im Düsenkörper geführte, radial bewegliche Schieber aufweist.

## Claims

1. An extrusion head for the extrusion blow-moulding of plastics vessels, comprising
an annular gap extrusion die (1) which comprises a mandrel (2) and an annular extrusion die body (3),
an elastically deformable sleeve (4), and
adjusting devices (5) for the radial deformation of the elastic sleeve (4),
wherein the sleeve (4) delimits an extrusion die gap, the gap width of which can be varied by axial adjusting movements of the mandrel (2) and/or of the extrusion die body (3), and the geometry of which can be influenced by the deformation of the sleeve (4) during the extrusion of a tubular preform, **characterised in that** the sleeve (4) is supported axially only on segment-like faces in the extrusion die body (3) and/or on the mandrel (2).

2. An extrusion head according to claim 1, **characterised in that** the sleeve (4) comprises cams (6), which are attached to its curved surface, which are disposed circumferentially at a spacing from each other, and which are supported axially in the extrusion die body (3) or on the mandrel (2).

3. An extrusion head according to claim 2, **characterised in that** the cams (6) are supported towards their bottom at least.

4. An extrusion head according to claim 2 or 3, **characterised in that** the cams (6) comprise a wide circumferential support face (9) for support and a neck (10) of lesser width which is integrally formed on the curved surface of the sleeve (4).

5. An extrusion head according to any one of claims 2 to 4, **characterised in that** the cams (6) are of identical construction and are disposed at equidistant spacings at the same height.

6. An extrusion head according to any one of claims 1 to 5, **characterised in that** the segment-like faces are disposed for support on the axis of action of force (7) and/or on an axis (8) transverse to the action of force of the adjusting devices (5).

7. An extrusion head according to claim 2, **characterised in that** in order to achieve an unsymmetrical deformation of the sleeve (4) the cams (6) disposed on the circumference are formed with different circumferential widths and/or are disposed at non-equidistant spacings on the circumference.

8. An extrusion head according to any one of claims 2 to 7, **characterised in that** the sleeve (4) can be inserted axially into the extrusion die body (3) as far as a stop and can be locked in the extrusion die body (3) by a rotary movement, wherein the cams (6) fit behind associated support faces of the extrusion die body (3) in the manner of a bayonet connection or a claw coupling.

9. An extrusion head according to any one of claims 2 to 8, **characterised in that** the cams (6) rest on a retaining ring (12) which can be inserted in the extrusion die body (3) and that the sleeve (4) comprises a deformable collar (13) which fits into the inside diameter of the retaining ring (12) with radial clearance.

10. An extrusion head according to any one of claims 2 to 9, **characterised in that** at its inlet end the sleeve (4) is held with an axial sliding seat inside the extrusion die body (3) so that the inlet edge of the sleeve (4) can move axially when there is a radial deformation of the sleeve, and that the cams (6), which are disposed in a plane underneath the inlet edge, are supported on a support face (14) of the extrusion die body (3) which permits a tilting movement of the cams (6).

11. An extrusion head according to claim 10, **characterised in that** the support face (14) adapts itself to the tilting movement of the cams (6).

12. An extrusion head according to claim 11, **characterised in that** the support face (14) is disposed so that it can execute tilting movements around an axis of rotation (15) transverse to the line of action of force of the adjusting devices (5).

13. An extrusion head according to claim 11, **characterised in that** the support face (14) is formed as a beam on two supports (17).

14. An extrusion head according to any one of claims 2 to 9, **characterised in that** at its inlet end the sleeve (4) is held with an axial sliding seat inside the extrusion die body (3) so that the inlet edge of the sleeve (4) can move axially when there is a radial deformation of the sleeve, and that the cams (6), which are disposed in a plane underneath the inlet edge, are formed as pegs or peg receivers which are mounted in a counter-part (3) so that they can execute sliding movements aligned transversely to the action of force of the adjusting devices (5).

15. An extrusion head according to any one of claims 2 to 14, **characterised in that** the adjusting devices (5) are attached to the cams (6).

16. An extrusion head according to any one of claims 2 to 15, **characterised in that** the extrusion die body (3) comprises an extrusion die upper part and an annular insert (23), wherein the adjusting devices (5) which act on the sleeve (4) are attached to the extrusion die upper part, wherein the cams (6) are supported on the insert (23), and wherein the insert (23), with the sleeve (4) and the mandrel (2), can be replaced without removing the extrusion die upper part and the adjusting devices (5).

17. An extrusion head according to claim 1, **characterised in that** at its inlet end the sleeve (4) comprises an annular collar (27) which is supported axially on segment-like faces.

18. An extrusion head according to claim 17, **characterised in that** the extrusion die body (3) or the mandrel (2) comprises an annular face for supporting the sleeve (4), which face is provided circumferentially with elevations (28) and/or indentations (29) for segmentally supporting the sleeve (4).

19. An extrusion head according to claim 17, **characterised in that** the support face of the annular collar (27) has a profile with protrusions and/or recesses for segmentally supporting the sleeve (4).

20. An extrusion head according to any one of claims 17 to 19, **characterised in that** the radial wall thickness of the annular collar (27) is non-uniform circumferentially.

21. An extrusion head according to any one of claims 1 to 20, **characterised in that** the extrusion die body (3) is radially movably disposed on the housing (18) of the extrusion head.

22. An extrusion head according to any one of claims 1 to 21, **characterised in that** the extrusion die body (3) and/or the mandrel (2) is equipped with an adjustable profiling device (21) which fits into the flow region of the annular gap.

23. An extrusion head according to claim 22, **characterised in that** the profiling device (21) which acts on the melt channel comprises a sliding sleeve which is guided on a centring sleeve (22) so that it can move axially independently of the mandrel (2), and comprises an end face, wherein the end face and/or an opposite conical section of the extrusion die body (3) is profiled circumferentially.

24. An extrusion head according to claim 22, **characterised in that** the profiling device (21) which acts on the melt channel comprises radially movable slides which are guided in the extrusion die body.

## Revendications

1. Tête de filière pour le moulage par extrusion-soufflage de récipients en matière plastique comportant
une buse à fente annulaire (1) qui comporte un mandrin (2) et un corps de buse (3) de forme annulaire
un manchon (4) déformable élastiquement et
des dispositifs de réglage (5) pour la déformation radiale du manchon élastique (4),
le manchon (4) délimitant une fente de buse dont la largeur de fente peut être modifiée par des mouvements de réglage axiaux du mandrin (2) et/ou du corps de buse (3), et dont la géométrie peut être influencée par déformation du manchon (4) pendant l'extrusion d'une paraison en forme de tuyau, **caractérisée en ce que** le manchon (4) est soutenu axialement dans le corps de buse (3) et/ou sur le mandrin (2) uniquement sur des surfaces en forme de segments.

2. Tête de filière selon la revendication 1, **caractérisée en ce que** le manchon (4) présente des cames (6) raccordées côté enveloppe et disposées à distance les unes des autres dans la direction périphérique, lesquelles cames sont soutenues axialement dans le corps de buse (3) ou sur le mandrin (2).

3. Tête de filière selon la revendication 2, **caractérisée en ce que** les cames (6) sont soutenues au moins vers le bas.

4. Tête de filière selon la revendication 2 ou 3, **caractérisée en ce que** les cames (6) présentent, dans la direction périphérique, une surface de support (9) large pour l'appui et un collet (10), formé sur la surface d'enveloppe du manchon (4), de largeur moindre.

5. Tête de filière selon l'une des revendications 2 à 4, **caractérisée en ce que** les cames (6) sont réalisées identiques et sont disposées à des écartements équidistants, à la même hauteur.

6. Tête de filière selon l'une des revendications 1 à 5, **caractérisée en ce que** les surfaces en forme de segment sont disposées pour l'appui dans l'axe d'action des forces (7) et/ou dans un axe (8) transversal à l'action des forces des dispositifs de réglage (5).

7. Tête de filière selon la revendication 2, **caractérisée en ce que** les cames (6), disposées sur le pourtour, présentent une largeur différente et/ou sont disposées sur le pourtour suivant des écartements non équidistants, pour obtenir une déformation asymétrique du manchon (4) dans la direction périphérique.

8. Tête de filière selon l'une des revendications 2 à 7, **caractérisée en ce que** le manchon (4) peut être inséré axialement dans le corps de buse (3) jusqu'à une butée, et peut être verrouillé par un mouvement de rotation dans le corps de buse (3), les cames (6) saisissant de l'arrière, à la manière d'une fermeture à baïonnette ou d'un accouplement à griffe, des surfaces de support associées du corps de buse (3).

9. Tête de filière selon l'une des revendications 2 à 8, **caractérisée en ce que** les cames (6) reposent sur un anneau de retenue (12), pouvant être inséré dans le corps de buse (3), et **en ce que** le manchon (4) comporte une collerette (13) déformable qui s'engage dans le diamètre intérieur de l'anneau de retenue (12), avec un jeu radial.

10. Tête de filière selon l'une des revendications 2 à 9, **caractérisée en ce que** le manchon (4) est maintenu à son extrémité côté entrée par un ajustement coulissant axial à l'intérieur du corps de buse (3), ce qui fait que le bord côté entrée du manchon (4), en cas de déformation radiale du manchon, est déplaçable dans la direction axiale, et **en ce que** les cames (6), disposées dans un plan au-dessous du bord côté entrée, sont soutenues sur une surface de support (14) du corps de buse (3) qui autorise un mouvement de basculement des cames (6).

11. Tête de filière selon la revendication 10, **caractérisée en ce que** la surface de support (4) s'adapte au mouvement de basculement des cames (6).

12. Tête de filière selon la revendication 11, **caractérisée en ce que** la surface de support (14) est disposée mobile en basculement autour d'un axe de rotation (15) transversal à la ligne d'action des forces des dispositifs de réglage (5).

13. Tête de filière selon la revendication 11, **caractérisée en ce que** la surface de support (14) est réalisée comme poutre sur deux appuis (17).

14. Tête de filière selon l'une des revendications 2 à 9, **caractérisée en ce que** le manchon (4) est maintenu à son extrémité côté entrée, par un ajustement coulissant axial à l'intérieur du corps de buse (3), ce qui fait que le bord côté entrée du manchon (4), en cas de déformation radiale du manchon, est déplaçable dans la direction axiale, et **en ce que** les cames (6), disposées dans un plan au-dessous du bord côté entrée, sont réalisées comme tenons ou logements de tenon, qui sont supportés orientés transversalement à l'action des forces des dispositifs de réglage (5) et mobiles à coulissement dans une contre-pièce (3).

15. Tête de filière selon l'une des revendications 2 à 14, **caractérisée en ce que** les dispositifs de réglage (5) sont raccordés aux cames (6).

16. Tête de filière selon l'une des revendications 2 à 15, **caractérisée en ce que** le corps de buse (3) comporte une partie supérieure de buse et un insert (23) de forme annulaire, les dispositifs de réglage (5), agissant sur le manchon (4), étant raccordés à la partie supérieure de la buse, les cames (6) étant soutenues sur l'insert (23) et l'insert (23) pouvant être échangé contre le manchon (4) et le mandrin (2) pouvant être échangé sans démontage de la partie supérieure de la buse et des dispositifs de réglage (5).

17. Tête de filière selon la revendication 1, **caractérisée en ce que** le manchon (4) présente, à son extrémité côté entrée, un épaulement (27) de forme annulaire qui est soutenu axialement sur des surfaces en forme de segment.

18. Tête de filière selon la revendication 17, **caractérisée en ce que** le corps de buse (3) ou le mandrin (2) présente une surface annulaire pour l'appui du manchon (4), laquelle surface annulaire est pourvue dans la direction périphérique de reliefs (28) et/ou de creux (29), pour l'appui en forme de segment du manchon dans la direction périphérique.

19. Tête de filière selon la revendication 17, **caractérisée en ce que** la surface de support de l'épaulement (27) de forme annulaire présente un profil avec des saillies et/ou des parties en retrait pour l'appui en forme de segment du manchon (4).

20. Tête de filière selon l'une des revendications 17 à 19, **caractérisée en ce que** l'épaisseur radiale de la paroi de l'épaulement (27) de forme annulaire est réalisée de manière non uniforme dans la direction périphérique.

21. Tête de filière selon l'une des revendications 1 à 20, **caractérisée en ce que** le corps de buse (3) est disposé mobile radialement sur le boîtier (18) de la tête de filière.

22. Tête de filière selon l'une des revendications 1 à 21, **caractérisée en ce que** le corps de buse (3) et/ou le mandrin (2) sont équipés d'un dispositif de profilage (21) réglable, s'engageant dans la zone d'écoulement de la fente annulaire.

23. Tête de filière selon la revendication 22, **caractérisée en ce que** le dispositif de profilage (21), agissant sur le canal de matière fondue, présente un manchon coulissant qui est guidé mobile axialement sur une douille (22), indépendamment du mandrin (2), et présente une surface frontale, la surface frontale et/ou une portion conique opposée du corps de buse (3) étant profilées dans la direction périphérique.

24. Tête de filière selon la revendication 22, **caractérisée en ce que** le dispositif de profilage (21), agissant sur le canal de matière fondue, comporte des coulisseaux mobiles radialement, guidés dans le corps de buse.
